Europäisches Patentamt

European Patent Office

Office européen des brevets

(19)

(11) **EP 0 653 118 B1**

(12) **EUROPEAN PATENT SPECIFICATION**

(45) Date of publication and mention
of the grant of the patent:
**08.10.1997 Bulletin 1997/41**

(21) Application number: **93918375.2**

(22) Date of filing: **26.07.1993**

(51) Int Cl.6: **H02P 9/00**, H02P 9/46,
H02P 9/16

(86) International application number:
**PCT/US93/06993**

(87) International publication number:
**WO 94/03970 (17.02.1994 Gazette 1994/05)**

(54) **ROTATING INDUCTION GENERATOR ADAPTED TO BE DRIVEN BY A PRIME MOVER FOR GENERATING ELECTRICAL POWER**

VON EINER ENERGIEQUELLE ANGETRIEBENER ROTIERENDER WECHSELSTROMGENERATOR ZUR ERZEUGUNG VON ELEKTRISCHER LEISTUNG

GENERATEUR A INDUCTION ROTATIF ENTRAINE PAR UNE SOURCE D'ENERGIE POUR PRODUIRE DU COURANT ELECTRIQUE

(84) Designated Contracting States:
**AT BE CH DE DK ES FR GB GR IE IT LI NL PT SE**

(30) Priority: **03.08.1992 US 924306**

(43) Date of publication of application:
**17.05.1995 Bulletin 1995/20**

(73) Proprietor: **HELLER DEJULIO CORPORATION**
**Concord, CA 94519 (US)**

(72) Inventor: **HELLER, Samuel**
**South Salem, NY 1590 (US)**

(74) Representative: **Froud, Clive et al**
**Elkington and Fife**
**Prospect House**
**8 Pembroke Road**
**Sevenoaks, Kent TN13 1XR (GB)**

(56) References cited:
**WO-A-90/00833          US-A- 3 969 659**
**US-A- 4 006 398          US-A- 4 065 704**

- **INTERNATIONAL JOURNAL OF ELECTRONICS,
  vol. 54, no. 6, June 1983, Basingstoke,
  Hampshire, GB, pp. 865-875; V. VELAYUDHAN et
  al.: 'Electronic rotor resistance for
  system-connected induction generator'**

## Description

Field of the Invention

This invention relates generally to rotary induction generators of the type having a wound rotor, and more particularly to wound rotor induction generators for generating electrical power.

Background of the Invention

In wound rotor induction generators, the currents in the secondary winding (usually the rotor) are created solely by induction. These currents result from voltages induced in the secondary windings by the rotating magnetic fields in the primary winding arising from the application of line voltages thereto. The rotor windings are generally connected to slip rings. When the rotor is driven at above the synchronous speed, either shorted or with proper equipment attached thereto as with a load connected to the slip rings, the machine acts as a generator over a wide range.

In general an induction generator with a squirrel-cage rotor has a "closed door" effect when overloaded. At overload, which occurs when the speed exceeds the synchronous speed by an amount slightly above the motor slip speed, the generator stops delivering power and offers little resistance to the prime mover. This occurs at rotary speeds quite close to normal operation. When the load is lost, the prime mover and the induction generator race to destruction together.

For the past thirty years or more when driving a synchronous generator or a squirrel-cage type induction generator with various types of prime movers, the speed of the electrical generator was kept nearly constant by employing mechanical methods for controlling the speed of the prime mover. These mechanical methods often fail to limit the speed of the prime mover when the load was lost.

For generators driven by wind power, spoilers, blade pitch control and mechanical brakes are used to limit the speed. These methods have a very short life and are costly to maintain.

The frequency in the wound secondary of the generator is in direct proportion to the rpm (revolutions per minute) above the base speed. Thus, in a 900 rpm, 8 pole, 60 hz machine, the frequency in the secondary at 900 rpm is zero. The rise in frequency is 60 hz for each 900 rpm above base speed. So it is 30 hz (hertz, cycles) at 1350 rpm (900 plus 450 equals 1350) and 60 hz (cycles) in the secondary of this machine at 1800 rpm. This is important. It means the generator is being driven in the same direction that it would run as a motor. Thus, there is no need to reverse any connections to use the generator as a motor for assisting the generator to reach base speed by means of any variable speed prime mover of power source, including wind and wave power.

A generator of this type is disclosed in WO90/00833. This generator employs impedance means associated with its secondary windings to correct the power factor.

Objects and Summary of the Invention

It is an object of this invention to provide a wound rotor induction generator which, when operated above its rated speed, still delivers power and continues to present a receptive load to the prime mover, thereby eliminating the necessity for uncertain mechanical speed controls on the variable speed prime mover.

It is another object of this invention to provide a rotary induction generator suitable for use in wind and wave power applications.

It is a further object of this invention to provide an induction generator which can be operated efficiently over a wide range of rotor speeds at constant frequency output.

An objective for electric power generation is to get maximum power output. The generator of the present invention can deliver power over a much wider range and at larger capacity than known generators. The generator maintains its load over a wide speed range (rpm, revolutions per minute) including speeds at which induction generators of the squirrel-cage type normally stop delivering power and at which time the traditional induction generator offers little resistance to the prime mover, often allowing the prime mover and generator to speed to destruction together.

Accordingly, the invention provides a rotary induction generator comprising a stator having wound thereon stator windings defining a three-phase stator;

a rotor mounted for rotation in said stator and having wound thereon three rotor windings defining a three-phase rotor;
said three-phase stator windings adapted to be connected to a source of power and serving as primary windings whereby the applied power causes current to flow in said three-phase windings and provide a rotating magnetic field;
said three-phase rotor windings serving as a secondary winding coupled to said magnetic field whereby currents are induced in said secondary windings; and
resistive means connected in series with said secondary windings to provide the magnetizing currents in the secondary; and characterised by
resistive-reactive means in series with said secondary windings to increase the efficiency of said generator and limit the power output to the capacity of the generator over a wide range of speeds, said resistive-reactive means being connected in parallel to the resistive means.

Moreover, the invention provides a method for load limiting in electric power generation with such a rotary induction generator, wherein the generator can run at variable speeds while maintaining the frequency of the line connected thereto over a wide range of prime mover speeds whereby the excess kilowatt output is limited by the resistive-reactive means.

The invention also provides a use of such a rotary induction generator for producing maximum electrical power generation output over a wide range of rotor speeds and at large capacity.

These and other objects of this invention will be more clearly understood from the following detailed description when taken in conjunction with the drawings, in which:

Brief Description of the Drawings

Figure 1 is a schematic diagram of an energy conversion system in accordance with this invention;
Figure 2 is a schematic diagram of a wound rotor induction generator for use in the energy conversion system of this invention; and
Figure 3 is a schematic diagram of another wound rotor induction generator in accordance with this invention.

Description of the Preferred Embodiment

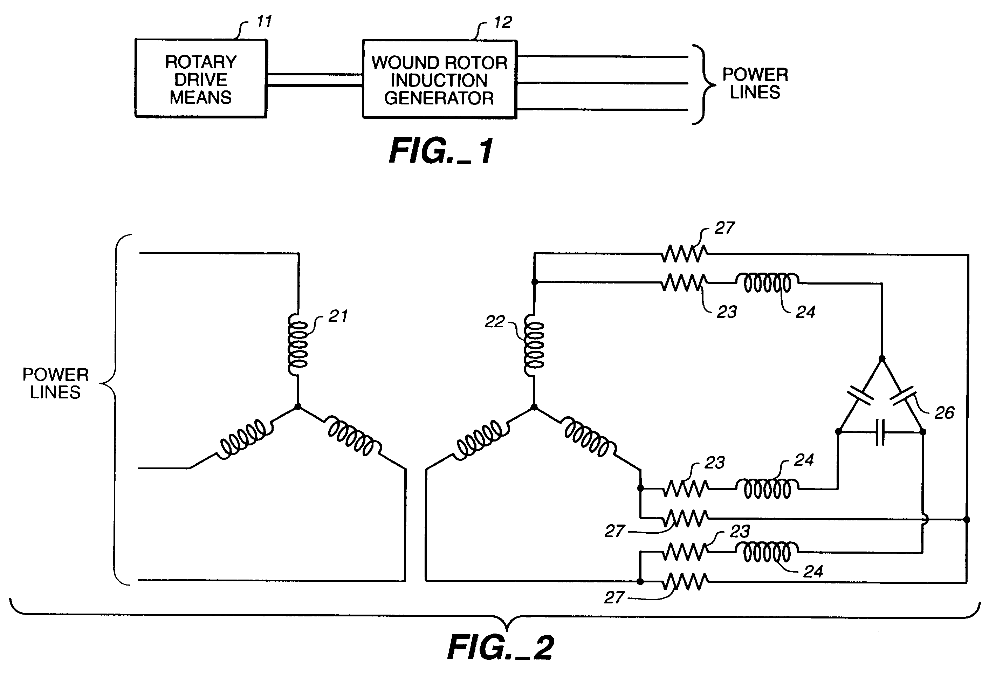

Referring to Figures **1**, there is shown rotary drive means **11** connected to a wound rotor induction generator **12**. The rotary drive means **11** can be driven from a wind turbine or from wave energy conversion apparatus. Alternatively, the drive means may be any other prime mover, such as a gas or diesel engine. In either event, the rotary speed (rpm) at which the generator is driven will depend directly on the velocity (rpm) of the prime mover. As described above, in conventional systems mechanical means are provided to maintain optimum rotary speed for the associated prime mover. Generally, such generators are induction generators of the squirrel-cage type driven at a substantially constant rotor speed. At excessive speeds the generator stops generating, reducing the load on the prime mover, frequently allowing it to run to destruction. Often the speed control does not respond rapidly enough to changes in prime mover speed, resulting in damage to the prime mover and generator.

It has been discovered that by adding a resistive-reactive load in series with the secondary windings and another parallel resistive circuit, also in series with the secondary windings, the maximum power can be limited without damage to the generator windings and the loss of output with overspeed operation can be eliminated.

Referring to Figure **2**, a three-phase wye connected generator is shown with the stator windings **21** connected to three-phase power lines. The power lines serve to generate revolving fields which excite current in the secondary windings **22** usually wound upon the rotor. The secondary windings **22** are connected to slip rings (not shown) which permit the connection of components such as resistors, capacitors or inductors in the secondary winding circuit. As mentioned above, the generator acts as a motor until the rotor rotates above synchronous speed at which time it acts as a generator supplying power to the power lines.

In Figure **2**, resistors **23** and inductors **24** are connected in series with each winding **22** to a delta arrangement of capacitors **26**, which in essence places capacitance in series with the resistors **23** and inductors **24**. In addition, resistors **27** are connected in series with each of the windings and connected to form a wye (star) point.

The resistors **27** act as a load on the secondary, thereby increasing the current in the secondary winding. This current creates the necessary magnetism to permit the other components connected to the secondary to function. The resistive-reactive components, **23**, **24**, **26** connected to the secondary windings are used for two purposes: (1) to improve the efficiency of the generator, and (2) to limit the output kilowatts at higher speeds.

The normal induction generator, with a squirrel-cage rotor, has a "closed door" effect when overloaded. At specific overload, the generator stops delivering power and unloads the prime mover. Unfortunately, the rpm at which this occurs is quite close to the rpm of normal generator usage. The no-load condition often causes the prime mover driving the generator, and the generator, to race to destruction.

The wound rotor induction generator with proper secondary components **23**, **24**, **26** continues to deliver output power as the speed increases. The wound rotor generator with proper components is therefore always under control electrically. It never sees the sudden no-load condition when operating with load. As mentioned above, the secondary components limit the output kilowatts as the speed gets too high. Thus, the unit is self-protecting. This kilowatt limiting effect is automatic with no contacts or relays. The limiting effect is beneficial to the generator and the prime mover.

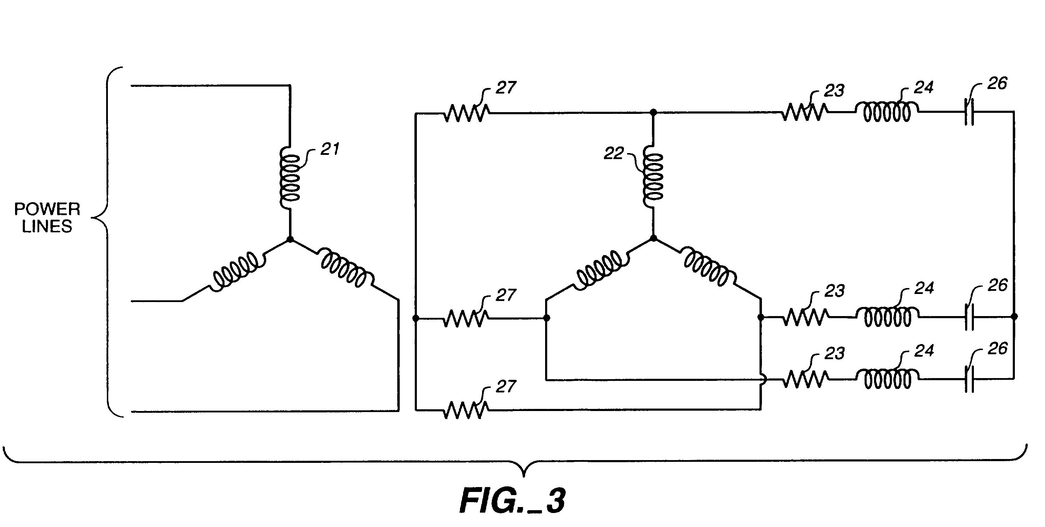

Figure 3 shows substantially the same circuit except that the capacitors are connected in a wye configuration. It is, of course, apparent that the primary or secondary of the wound rotor motor/generator may be connected in either delta or wye configuration to achieve the objectives of the present invention. Also, the rotor or the stator may be either the primary of the secondary, provided the windings are correct for the primary voltage that is to be applied. (The secondary components can always be matched to the secondary windings.)

Therefore, there is provided in the instant invention a method for load limiting in electric power generators of the induction type with a wound rotor machine. This generator can be driven at variable speeds and maintain the constant frequency of the line connected thereto. The speeds can vary over a wide range above the synchronous (base) speed. Excess kilowatt output is controlled by the circuit employing a first circuit of three sets of resistors, inductors and capacitors in series. Then each set of said first circuit is connected to the secondary windings and the ends of the three sets connected together to form a wye (star) point.

Then each set is connected in parallel each with a separate set of resistors also connected to the secondary windings and joined together to obtain a wye (star) point. When the preset output limit of kilowatts is reached, the secondary components (resistors, inductors and capacitors in both circuits) assist in determining at what speed this will occur, as well as, the maximum point or number of kilowatts of output. The inductors in series with the capacitors initially act as ordinary resistors of very low ohmage, thereby permitting the capacitors to obtain whatever voltage is being generated. As the speed of the generator is increased, so is the frequency of the secondary output, resulting in a high resistance in the reactors, and the opposite effect in the capacitors, i.e., the capacitive reactance is decreased.

The synchronous or base speed of any three phase machine is found by substituting known values in this formula:

$$\text{Synchronous or base rpm} = \frac{120\,f}{\text{number of poles,}}$$

where f is the frequency in hz (cycles).

It has been found the inductive reactance at a specified frequency can be determined by the formula

$$X_{L\text{(Henries)}} = 2\,\P\,f\,L\,;$$

wherein $X_L$ is the inductive reactance in ohms; f is frequency in (hz, cycles), and L is induction in Henries; the capacitive reactance can be described by the formula

$$X_{C\text{ (microfarads)}} = \frac{10^6}{2\,\P\,fC}\,;$$

wherein $X_C$ is capacitive reactance in ohms, f is frequency in (hz, cycles), and C is capacitance in microfarads. The result of computing the resistance (R), capacitance (C) and inductance (L) in series is the impedance, Z, ohms:

$$Z = \sqrt{R^2 + (X_L - X_C)^2}\,.$$

There are four effects that determine the limit to the kilowatt output of the generator.

1. The secondary winding resistance and the secondary resistors connected to the windings .
2. The resistors connected in series with the reactors and capacitors connected to the secondary windings.
3. The reactors connected in series with the resistors and capacitors connected to the secondary windings.
4. The capacitors in series with the resistors and reactors connected to the secondary windings.

Each item can be adjusted to affect the output rpm, the output kilowatts, and the output efficiency. The items also affect the kilowatts at which the generator will limit its output as well as the point in kilowatts that the generator will go to, if the kilowatt limit is exceeded. The RΔ resistors **23** act to bring the limiting kilowatts and the kilowatts resulting after the limit, closer together. The last item is very important, and is not easily verified. The jump between the limiting kilowatts and the decrease that the limit is located at, varies a great deal, with the RΔ resistors **23** acting as a vernier control.

For example, in a 3 kilowatt machine (at 1138 rpm), the upper load limit can be made 3.5 kilowatts (or more). The moment this quantity is reached (at 1171 rpm in this example), the output kilowatts will decrease to anywhere from 3 kilowatts to 1.5 kilowatts. Generally the amperes decreases with the drop in kilowatts. (The 10 kVA non-regulated generator, used as a source of three phase power in this experiment, immediately races to a much higher speed (1287) with the lightened load. This would be impossible with a power utility line connected to the primary windings.)

The rotor speed must be reduced to come back to the point where the generator will start to increase its kilowatts output again. In this specific case, it appeared to be about 1129 rpm.

Under wind or wave power operation, the limiting capacity of the generator will accept gusts of wind or large waves without damage to the generator, and will pay for itself by accepting the gusts or large waves producing extra power pulses instead of discarding these comparatively large kilowatt loads.

The generator starts to generate well beyond its minimum limit in speed. For example, in the drop from 3.5 kilowatt (at about 1171 rpm) mentioned above, the generator dropped to 3.0 kilowatts. It "raced" to over 1200 rpm at the lower kilowatt output, where the generator could be driven to a higher speed without increasing its kilowatt output (but its input amperes will increase). The generator will come back to start generating above its lower limit, somewhat above the 1129 rpm it left, to reduce its kilowatt output.

The limiting points can be computed by knowing the phase resistance of the rotor and the resistance of the external resistance per phase. Using the formulae for the impedance of the reactors and the capacitors (which oppose each other) an approximation can be made. Then the RΔ **23** can be used for slight changes as desired.

It will be seen that the present invention provides a wound rotor induction generator adapted to be driven by a prime mover for generating electrical power and wherein said adaptation will results in load limiting in the generator so that the generator can be run at variable speeds and maintain constant frequency of the line connected thereto and that others may readily adapt the present invention for various applications without omitting features and elements that fairly constitute essential characteristics of the generic or specific aspects of this invention as defined by the following claims.

## Claims

1. A rotary induction generator comprising a stator having wound thereon stator windings (21) defining a three-phase stator;

   a rotor mounted for rotation in said stator and having wound thereon three rotor windings (22) defining a three-phase rotor;
   said three-phase stator windings (21) adapted to be connected to a source of power and serving as primary windings whereby the applied power causes current to flow in said three-phase windings and provide a rotating magnetic field;
   said three-phase rotor windings (22) serving as a secondary winding coupled to said magnetic field whereby currents are induced in said secondary windings; and
   resistive means (27) connected in series with said secondary windings to provide the magnetizing currents in the secondary; and characterised by
   resistive-reactive means (23,24,26) in series with said secondary windings to increase the efficiency of said generator and limit the power output to the capacity of the generator over a wide range of speeds, said resistive-reactive means being connected in parallel to the resistive means (27).

2. A rotary induction generator as in Claim 1 in which said stator windings are connected to the source of power and rotor is connected to a prime mover.

3. A rotary induction generator as in Claim 2 in which the prime mover is wind power.

4. A rotary induction generator as in Claim 2 in which the prime mover is wave power.

5. A rotary induction generator as in any preceding claim in which the resistive-reactive means comprises induction and capacitive in series with resistive means and this series set is connected in a wye configuration.

6. A rotary induction generator as in any of claims 1 to 4 in which the resistive-reactive means comprises induction and capacitive meaps in series with resistive means and this series set is connected in a substantial delta configuration.

7. A method for load limiting in electric power generation with a rotary induction generator as claimed in any preceding claim, wherein the generator can run at variable speeds while maintaining the frequency of the line connected thereto over a wide range of prime mover speeds comprising the step of limiting the excess kilowatt output by the resistive-reactive means.

8. A use of a rotary induction generator as claimed in any of claims 1 or 6 for producing maximum electrical power generation output over a wide range of rotor speeds and at large capacity.

## Patentansprüche

1. Drehinduktionsgenerator, umfassend einen Stator, der darauf gewickelte Statorwicklungen (21) hat, die einen Dreiphasenstator definieren;

   einen Rotor, der zur Rotation in dem Stator angebracht ist und drei darauf gewickelte Rotorwicklungen (22) hat, die einen Dreiphasenrotor definieren;
   wobei die Dreiphasen-Statorwicklungen (21) dazu geeignet sind, mit einer Stromquelle verbunden zu werden und als Primärwicklungen dienen, wodurch die angewandte Leistung bewirkt, daß Strom in den Dreiphasenwicklungen fließt und ein rotierendes Magnetfeld liefert;
   wobei die Dreiphasen-Rotorwicklungen (22) als eine sekundäre Wicklung dienen, die an das Magnetfeld angekoppelt ist, wodurch Ströme in den sekundären Wicklungen induziert werden; und
   Widerstandsmittel (27), die in Reihe mit den Sekundärwicklungen geschaltet sind, um die Magnetisierungsströme in den Sekundärwicklungen vorzusehen; und **gekennzeichnet** durch
   ohmisch-induktive Mittel bzw. ohmisch-reaktive Mittel bzw. Widerstands-Blindmittel (23, 24, 26) in Reihe mit den Sekundärwicklungen zum Erhöhen der Leistungsfähigkeit bzw. des Wirkungsgrads des Generators und zum Begrenzen des Leistungsausgangs zu der Kapazität des Generators über einen weiten Bereich von Geschwindigkeiten, wobei die ohmisch-induktiven Mittel bzw. ohmisch-reaktiven Mittel bzw. Widerstands-Blindmittel parallel zu den Widerstandsmitteln (27) geschaltet sind.

**2.** Drehinduktionsgenerator nach Anspruch 1, worin die Statorwicklungen mit der Stromquelle verbunden sind und der Rotor mit einem Antrieb verbunden ist.

**3.** Drehinduktionsgenerator nach Anspruch 2, worin der Antrieb Windkraft ist.

**4.** Drehinduktionsgenerator nach Anspruch 2, worin der Antrieb Wellenkraft ist.

**5.** Drehinduktionsgenerator nach irgendeinem vorhergehenden Anspruch, worin das ohmisch-induktive Mittel bzw. ohmisch-reaktive Mittel bzw. Widerstands-Blindmittel Induktions- und Kapazitivmittel in Reihe mit Widerstandsmittel umfaßt und dieses Reihensystem in einer Sternschaltungskonfiguration geschaltet ist.

**6.** Drehinduktionsgenerator nach irgendeinem der Ansprühe 1 bis 4, worin das ohmisch-induktive Mittel bzw. ohmisch-reaktive Mittel bzw. Widerstands-Blindmittel Induktions- und Kapazitivmittel in Reihe mit Widerstandsmittel umfaßt und dieses Reihensystem in einer im wesentlichen Dreieck-Konfiguration geschaltet ist.

**7.** Verfahren zur Lastbegrenzung bei der elektrischen Leistungserzeugung mit einem Drehinduktionsgenerator, wie er in irgendeinem vorhergehenden Anspruch beansprucht ist, worin der Generator mit variablen Geschwindigkeiten laufen kann, während die Frequenz der damit verbundenen Leitung über einen weiten Bereich von Antriebsgeschwindigkeiten aufrechterhalten wird, umfassend den Schritt des Begrenzens der überschüssigen Kilowattausgangsleistung durch das ohmisch-induktive Mittel bzw. ohmisch-reaktive Mittel bzw. Widerstands-Blindmittel.

**8.** Verwendung eines Drehinduktionsgenerators, wie er in irgendeinem der Ansprüche 1 bis 6 beansprucht ist, zum Erzeugen von maximaler elektrischer Leistungserzeugungsausgangsleistung über einen weiten Bereich von Rotorgeschwindigkeiten und bei bzw. mit großer Kapazität.

**Revendications**

**1.** Générateur à induction rotatif comprenant un stator sur lequel sont enroulés des enroulements de stator (21) définissant un stator triphasé ;

un rotor monté en rotation dans le stator sur lequel sont enroulés trois enroulements de rotor (22) définissant un rotor triphasé ; ces enroulements de stator triphasé (21) pouvant être connectés à une source de puissance et servant d'enroulements primaires de sorte que la puissance appliquée fait passer le courant dans les enroulements triphasés et assure un champ magnétique rotatif ;
ces enroulements de rotor triphasé (22) servant d'enroulements secondaires couplés au champ magnétique de façon à induire des courants dans les enroulements secondaires ; et
des moyens résistifs (27) connectés en série aux enroulements secondaires pour fournir des courants de magnétisation dans les enroulements secondaires ; générateur à induction rotatif caractérisé par
des moyens réactifs-résistifs (23, 24, 26) connectés en série aux enroulements secondaires pour améliorer l'efficacité du générateur et limiter la sortie de puissance à la capacité du générateur sur une vaste plage de vitesses, ces moyens réactifs-résistifs étant connectés en parallèle aux moyens résistifs (27).

**2.** Générateur à induction rotatif selon la revendication 1, dans lequel les enroulements de stator sont connectés à la source de puissance et le rotor est connecté à un élément moteur.

**3.** Générateur à induction rotatif selon la revendication 2, dans lequel l'élément moteur est l'énergie éolienne.

**4.** Générateur à induction rotatif selon la revendication 2, dans lequel l'élément moteur est l'énergie houlomotrice.

**5.** Générateur à induction rotatif selon l'une quelconque des revendications précédentes, dans lequel les moyens réactifs-résistifs comprennent des moyens capacitifs et à induction connectés en série aux moyens résistifs et cet ensemble en série est monté en une configuration étoile.

**6.** Générateur à induction rotatif selon l'une quelconque des revendications 1 à 4, dans lequel les moyens réactifs-résistifs comprennent des moyens à induction et capacitifs connectés en série aux moyens résistifs et cet ensemble en série est monté en une configuration sensiblement en triangle.

**7.** Procédé pour limiter la charge dans la génération de puissance électrique avec un générateur à induction rotatif selon l'une quelconque des revendications précédentes, dans lequel le générateur peut fonctionner à des vitesses variables tout en maintenant la fréquence de la ligne connectée à celui-ci sur une vaste plage de vitesses de l'élément moteur comprenant l'étape visant à limiter la sortie en kilowatts excédentaires par les moyens réactifs-résistifs.

8. Utilisation d'un générateur à induction rotatif selon l'une quelconque des revendications 1 à 6, pour produire une sortie de génération de puissance électrique maximum sur une vaste plage de vitesses de rotor et à grande capacité.

FIG._1

FIG._2

EP 0 653 118 B1

POWER
LINES

*FIG._3*

EP 0 653 118 B1